# EUROPEAN PATENT SPECIFICATION

(11) **EP 3 851 871 B1**
(45) Date of publication and mention of the grant of the patent: **17.04.2024**
(21) Application number: 21151888.1
(22) Date of filing: 15.01.2021
(51) Int. Cl.: G01S 7/41, G01S 13/58, G01S 13/89, G01S 13/931

(54) **LIVING BODY RADAR SYSTEM, IDENTIFICATION METHOD, AND FEATURE DATABASE ESTABLISHMENT METHOD**
RADARSYSTEM FÜR LEBENDE KÖRPER, IDENTIFIZIERUNGSVERFAHREN UND MERKMALSDATENBANKERSTELLUNGSVERFAHREN
SYSTÈME DE RADAR DE CORPS VIVANTS, PROCÉDÉ D'IDENTIFICATION ET PROCÉDÉ D'ÉTABLISSEMENT DE BASE DE DONNÉES DE CARACTÉRISTIQUES

(30) Priority: 16.01.2020 TW 109101432
(43) Date of publication of application: 21.07.2021
(73) Proprietor: Cubtek Inc., Zhubei City, Hsinchu County 302 (TW)
(72) Inventor: YU, San-Chuan, Zhubei City, Hsinchu County 302 (TW); CHEN, Cheng-Foo, Zhubei City, Hsinchu County 302 (TW); WANG, Hsiao-Ning, Zhubei City, Hsinchu County 302 (TW); HSU, Chun-Jie, Zhubei City, Hsinchu County 302 (TW)
(74) Representative: Patentwerk B.V.

(56) References cited:
- DE-A1-102016 215 102
- DE-B3-102018 203 591
- US-A1- 2011 304 498
- US-A1- 2018 348 343
- JOKANOVIC BRANKA ET AL: "Multiple joint-variable domains recognition of human motion", 2017 IEEE RADAR CONFERENCE (RADARCONF), IEEE, 8 May 2017 (2017-05-08), pages 948-952, XP033104153, DOI: 10.1109/RADAR.2017.7944340 [retrieved on 2017-06-07]
- XINYU LI ET AL: "A survey of deep learning-based human activity recognition in radar", REMOTE SENSING, MOLECULAR DIVERSITY PRESERVATION INTERNATIONAL (MDPI), CH , vol. 11, no. 9 30 April 2019 (2019-04-30), page 1068 (22p), XP009527370, ISSN: 2072-4292, DOI: HTTP://WWW.MDPI.COM/2072-4292/11/9/1068 Retrieved from the Internet: URL:http://www.mdpi.com/2072-4292/11/9/106 8

## Description

### BACKGROUND OF THE INVENTION

### 1. Field of the Invention:

The present invention relates to living body detection techniques, and more particularly, to a living body radar system, living body identification method, and feature database establishment method.

### 2. Description of the Related Art:

An advanced driver assistance systems (ADAS) is a main target of development in related industries. Concerning an assistant driver and automatic driving technique of any stage, the most important is to effectively determine an emergency and conduct corresponding actions. Among other things, the most crucial one is to correctly identify the living body, such as a pedestrian, which is met during the movement of vehicle, so as to carry out an immediate reaction when facing risk of collision. However, during the movement of vehicle, the time for identifying a pedestrian and conducting an appropriate reaction is relatively short, and the driver must rely on the determination of system. Therefore, an accurate and efficient determination module is desirable for meeting a driving safety demand upon an advanced driver assistance system. Thus, how to quickly and correctly determine that there are living bodies such as pedestrians or animals in front of the driver during driving, and to make timely braking or dodge response actions to avoid threating the living bodies, is a crucial target for the development of advanced driving assistance system technology.

According to existing detection technology for obstacles identification, such as radar technology, the radio wave information thereby generated can only detect the location and distance of the obstacle, and is unable to show the image of the living body, so that it is difficult to identify if the obstacle is a living body, especially a pedestrian. Regarding the identification method of image capturing, although it is able to identify the obstacle as a living body, but the issues of failing to accurately identify the moving speed and distance of the living body remain unsolved.

Accordingly, US10354160B2 discloses a pedestrian detection device and pedestrian detection method, which is a pedestrian detection system applying a camera-based image capturing process with a camera radar fusion technique, so as to identify if the obstacle is a pedestrian according to the captured image. However, the pedestrian image captured through camera is easily affected by interference of light. For example, under cloudy, rainy or dark environments, the image will be dim and blurred due to insufficient light; when the light is too bright, the image will be overexposed. Such situations will cause the pedestrian image to be unclear, causing the occurrence of misidentification of the image, and the life of the pedestrian is seriously threatened.

Further prior disclosures which are relevant to the invention, in particular to the field of living body detection techniques by radar detection, are patent documents DE 10 2018 203591 B3, US20180348343A1, DE102016215102.9A, and US20110304498A1. Also relevant to the technical field of the invention are the scientific articles "Multiple joint-variable domains recognition of human motion" (Jokanovic Branka et al., (2017), IEEE Radar Conference), and "A Survey of Deep Learning-Based Human Activity Recognition in Radar" (Xinyu Li et al., (2019), Remote Sensing, Molecular Diversity Preservation International (MDPI), vol. 11, no. 9, page 1068).

### SUMMARY OF THE INVENTION

To improve the issues above, the present invention discloses a living body radar system and an identification method as defined by the appended claims. An image analysis and frequency spectrum analysis are applied as the main detection techniques for identifying if the target object is a living body.

For achieving the aforementioned objectives, living body radar system and identification method thereof are provided. The system comprise an image analysis unit, a frequency spectrum analysis unit, and a calculation unit electrically connected with the image analysis unit and the frequency spectrum analysis unit. The calculation unit comprises a feature extraction portion and a match identification portion. The image analysis unit receives a signal detected by a radar and signally processes the signal to produce a plurality of sample points for forming an image signal. The frequency spectrum analysis unit receives the signal and signally processes the signal to produce a frequency spectrum signal. The feature extraction portion receives the image signal and the frequency spectrum signal for feature extraction, thereby acquiring a target feature of a target object. The match identification portion conducts a comparison on the target feature, so as to identify if the target object is a living body.

With such configuration, during a movement of a target object, the feature extraction portion receives the image signal and the frequency spectrum signal for feature extraction to acquire the target feature, and the match identification portion conducts a comparison on the target feature, such that the two phenomena are integrated in a complementary manner for identifying the true movement model of the target object, thereby resolving the issue of possible image misidentification due to light interference during image capturing process of a conventional camera, and accurately identifying if the target object is a living body.

A feature database establishment method is not according to the invention and is presented for illustration purpose only, said method, which collects a radar signal of a living body, comprises the steps of receiving the signal with the image analysis unit and signally processing the signal to produce a plurality of sample points for forming an image sample signal, and also receiving the signal with the frequency spectrum analysis unit and signally processing the signal to produce a frequency spectrum sample signal; conducting feature extraction on the image sample signal and the frequency spectrum sample signal with the feature extraction portion to acquire a comparison feature; and establishing the comparison feature in a feature database and categorizing it as the comparison feature of the living body.

With the establishment of the feature database, the comparison features categorized as the living body are taken as the standard for feature comparison of the target feature by the match identification portion, so as to accordingly identify if the target object is a living body. Also, the feature database is allowed to be continuously added with different comparison features that are categorized as a living body. By expanding the feature database with different comparison features, when identifying if the target object is a living body, the living body radar system achieves a deep-depth learning with artificial intelligence. Therefore, sufficient comparison samples are taken as reference for comparison of target features by the match identification portion, thereby assuring a high accuracy for identifying if the target object is a living body.

### BRIEF DESCRIPTION OF THE DRAWINGS

**Fig. 1** is a block diagram of the living body radar system in accordance with an embodiment of the present invention.
**Fig. 2** is another block diagram of the living body radar system in accordance with an embodiment of the present invention.
**Fig. 3** is a flow chart of the living body identification method in accordance with an embodiment of the present invention.
**Fig. 4** is a flow chart of the database establishment method in accordance with an embodiment of the present invention.
**Fig. 5** is a sample point distribution diagram presented by the image signal when the target object is a tree.
**Fig. 6** is a waveform diagram presented by the frequency spectrum signal when the target object is a tree.
**Fig. 7** is a sample point distribution diagram presented by the image signal when the target object is a dog.
**Fig. 8** is a waveform diagram presented by the frequency spectrum signal when the target object is a dog.
**Fig. 9** is a sample point distribution diagram presented by the image signal when the target object is a pedestrian.
**Fig. 10** is a waveform diagram presented by the frequency spectrum signal when the target object is a pedestrian.

### DETAILED DESCRIPTION OF THE INVENTION

Embodiments of the present invention are illustrated in detail along with the drawings. However, the technical features included by the present invention are not limited to certain embodiments hereby provided. Scope of the present invention shall be referred to the claims, which include all the possible replacements, modifications, and equivalent features.

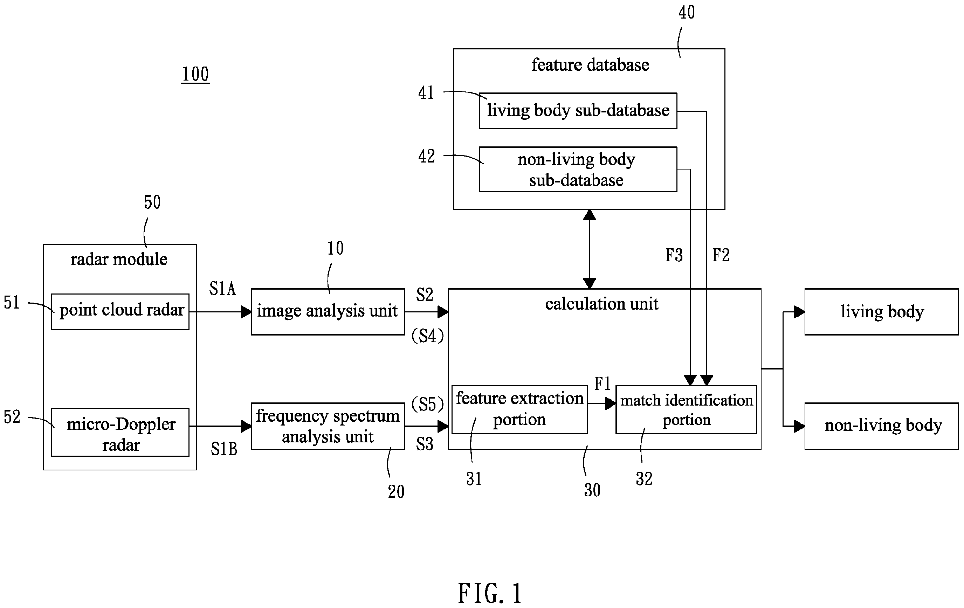

Referring to **Fig. 1** to **Fig. 10****,** the present invention provides a living body radar system **100,** and a living body identification method **200.**

The living body radar system **100,** as shown by the embodiment of **Fig. 1****,** comprises an image analysis unit **10,** a frequency spectrum analysis unit **20,** and a calculation unit **30.** The calculation unit **30** further comprises a feature extraction portion **31** and a match identification portion **32,** wherein the match identification portion **32** is electrically connected with a feature database **40.** In the embodiment, the calculation unit **30** applies an artificial intelligence system based on a long short-term memory (LSTM) algorithm for carrying out a feature extraction and comparison determination process. However, the present invention is not limited to such embodiment.

In the embodiment, a radar module **50** is further included, which can transmit and receive an electromagnetic signal whose wavelength fulfils the condition of: 0.001 mm < λ ≤ 12mm, preferably 1 mm < λ ≤ 10mm, more preferably 3mm < λ ≤ 5mm. The radar module **50** comprises a point cloud radar **51** and a micro-Doppler radar **52.** The point cloud radar **51** detects a target object to produce a first signal **S1A,** and the micro-Doppler radar **52** detects the same target object to produce a second signal S1B.

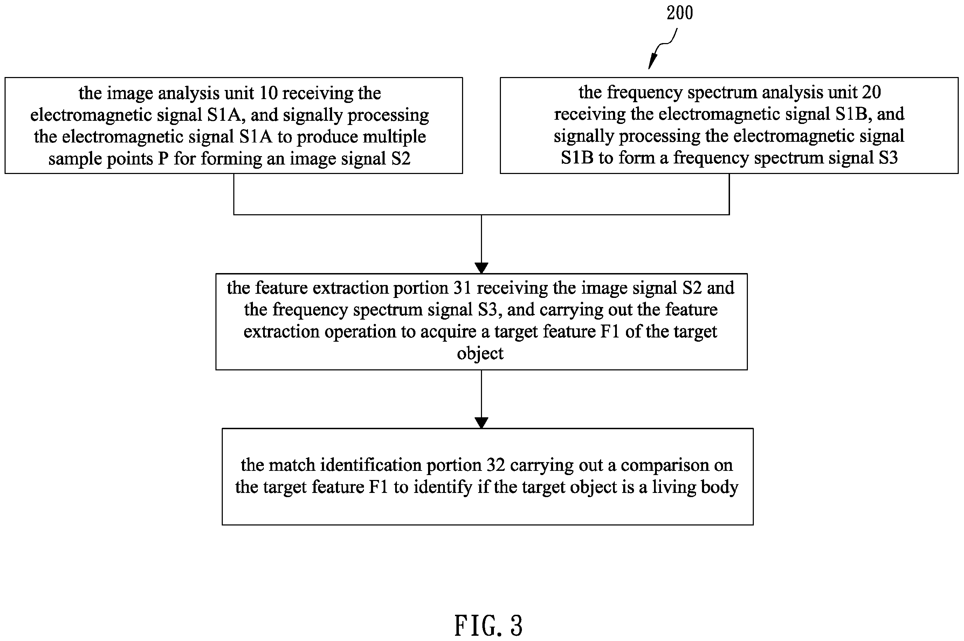

The living body identification method **200** applied by the living body radar system **100** is illustrated in **Fig. 3****.** In the embodiment, the image analysis unit **10** receives the signal **S1**A and processes the signal **S1A** to produce a plurality of sample points **P,** so as to form an image signal **S2.** Also, the frequency spectrum analysis unit **20** receives the signal **S1**B and processes the signal **S1B** to produce a frequency spectrum signal **S3.** Then, the feature extraction portion **31** receives the image signal **S2** and the frequency spectrum signal **S3** and carries out a feature extraction operation, thereby acquiring a target feature **F1** of the target object, after which the match identification portion **32** carries out a comparison on the target feature **F1,** so as to identify if the target object is a living body.

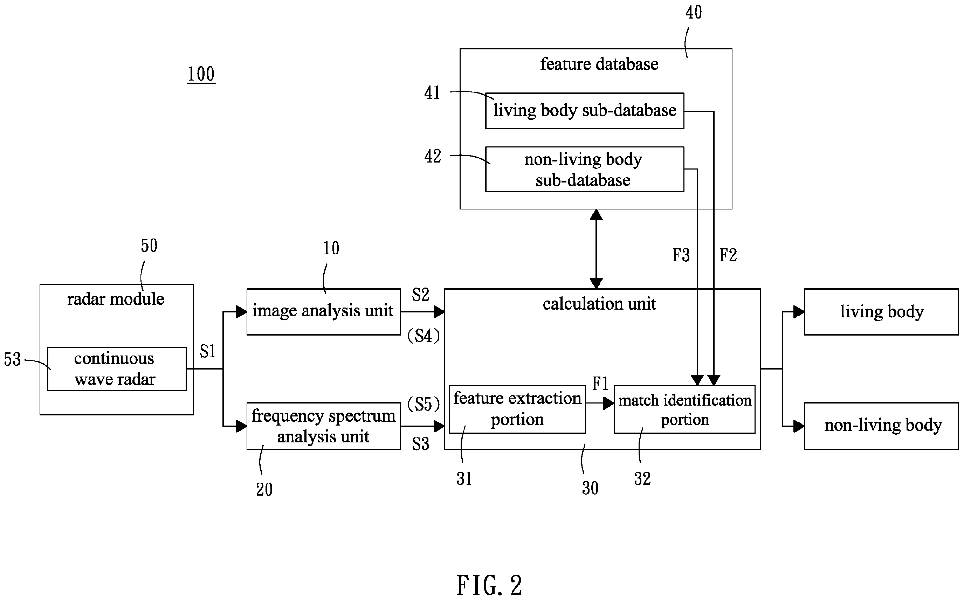

The radar module **50** is not limited to the two radars as the point cloud radar **51** and the micro-Doppler radar **52** in the embodiment. In different embodiments, the radar module **50** is allowed to be a single continuous wave radar **53** (as shown by **Fig. 2**), wherein the continuous wave radar **53** can transmit and receive an electromagnetic signal whose wavelength fulfils the condition of: 0.001 mm < λ ≤ 10 mm, preferably 1 mm < λ ≤ 10 mm, more preferably 3 mm < λ ≤ 5 mm. The continuous wave radar **52** detects a target object to produce a signal **S1,** and the signal **S1** is analyzed by the image analysis unit **10** and the frequency spectrum analysis unit **20** to form the aforementioned image signal **S2** and frequency spectrum signal **S3,** respectively, after which the feature extraction portion **31** carries out the feature extraction operation as well.

The feature database **40** stores the comparison feature **F2** corresponding to a living body. When the match identification portion **32** carries out the comparison on the target feature **F1,** the match identification portion **32** accesses the comparison feature **F2** and accordingly compares the target feature **F1** with the comparison feature **F2.**

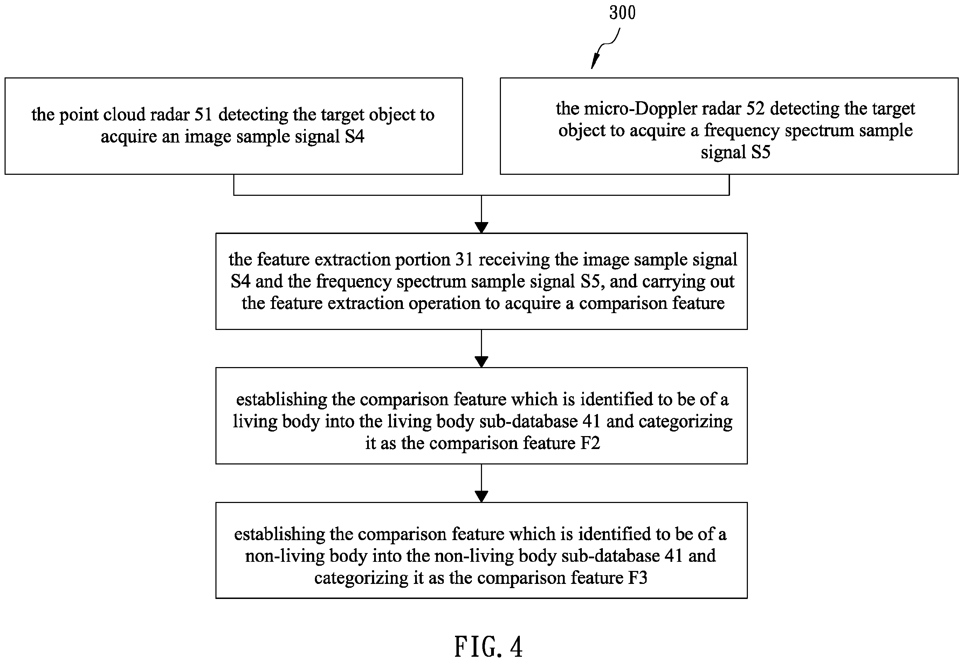

**Fig. 4** illustrates a feature database establishment method **300** of the living body radar system **100,** which optionally can be applied within the context of the present disclosure, but is not part of the invention as defined by the appended claims. The method **300** applies the radar module **50** to detect a target object. In the embodiment, the point cloud radar **51** is applied for detecting the target object to acquire an image sample signal **S4,** and the micro-Doppler radar **52** is applied for detecting the target object to acquire a frequency spectrum sample signal **S5.** Then, the feature extraction portion **31** receives the image sample signal **S4** and the frequency spectrum sample signal **S5** and carries out the features extraction operation to acquire a comparison feature. If the comparison feature is identified as a living body feature, the comparison feature is added into the feature database **40** and categorized as the comparison feature **F2** of living body. If the comparison feature is identified as a non-living body feature, the comparison feature is added into the feature database **40** and categorized as the comparison feature **F3** of non-living body.

In a preferable embodiment, the feature database **40** comprises a living body sub-database **41,** which stores the comparison features **F2** that are categorized as living body and to be applied as the standard for the match identification portion **32** to identify a living body. Further, the feature database **40** comprises a non-living body sub-database **42,** which stores the comparison features **F3** that are categorized as non-living body and to be applied as the standard for the match identification portion **32** to exclude the target object from a living body. The non-living body in the embodiment mainly refers to any objects that are not movable, such as a tree or a wire pole.

In the living body identification method **200** in the embodiment, taking a pedestrian as an example during the comparison between the comparison feature **F2** and the target feature **F1,** the image signal **S2** is compared with the lower limbs motion of a walking human body in the image sample signal **S4,** and the frequency spectrum signal **S3** is compared with the lower limbs motion and the body motion of a walking human body in the frequency spectrum sample signal **S5.** Or, when the target object is a non-living body (such as a tree or a wire pole), the profile of the aforementioned lower limbs and body are taken for differentiating a non-living body and a pedestrian.

Application of the living body radar system **100** and the living body identification method **200** in the present invention for identifying a target object during a vehicle movement process are illustrated as follows

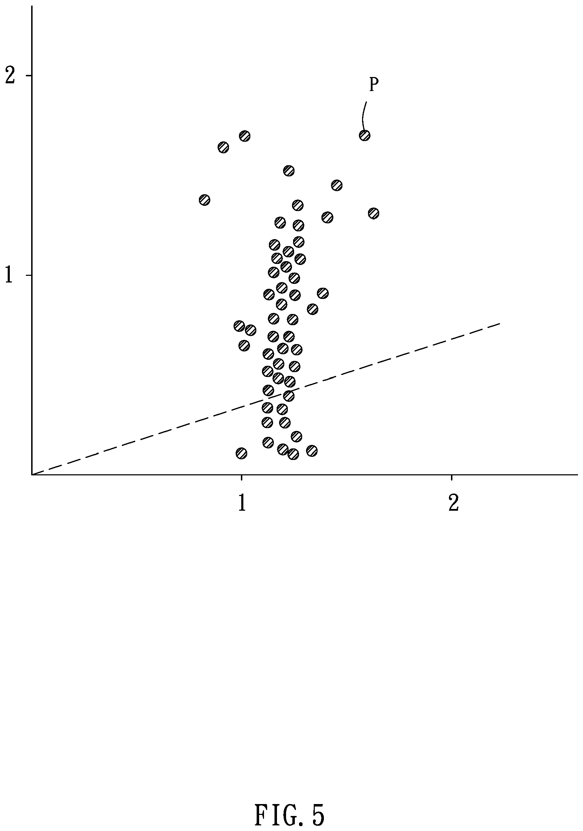

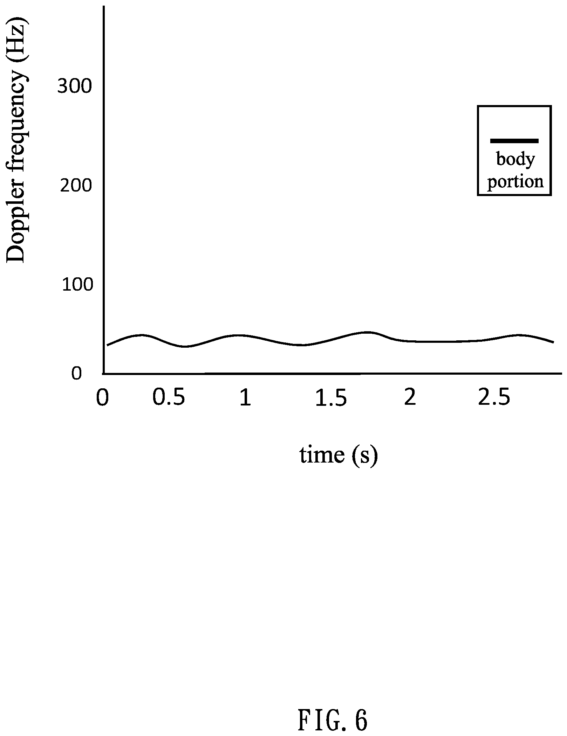

During the movement of vehicle having the aforementioned living body radar system **100** on the road, in an embodiment, when the radar module **50** detects a target object which is a tree, the point cloud radar **51** produces a first signal **S1A,** the micro-Doppler radar **52** produces a second signal **S1B,** and the image analysis unit **10** receives and processes the signal **S1**A to produces the image signal **S2,** wherein the multiple sample points **P** of the image signal **S2** are illustrated in **Fig. 5****,** which comprises the sample points **P** presented as an obvious straight body portion and a scattering portion on the top of the body portion. According to the dynamic change of the sample points P, the straight body portion does not present any lower limbs movement and remains stationary, with only slow movement of the scattering sample points P being shown on the top of the straight body. Also, the frequency spectrum analysis unit **20** receives and processes the signal **S1B** to produce the frequency spectrum signal, which is shown as the waveform diagram presenting a mild wave steepness in **Fig. 6****.** Therefore, the target feature **F1** of the target object acquired by the feature extraction portion **31** from the image signal **S2** and the frequency spectrum signal **S3** is compared with the comparison feature **F2,** so as to determine that the target object having the target feature **F1** is not a living body as a pedestrian or animal. After a further comparison with the comparison feature **F3,** the target object is deemed as a non-living body according to the image signal **S2** and the frequency spectrum signal **S3** of the target feature.

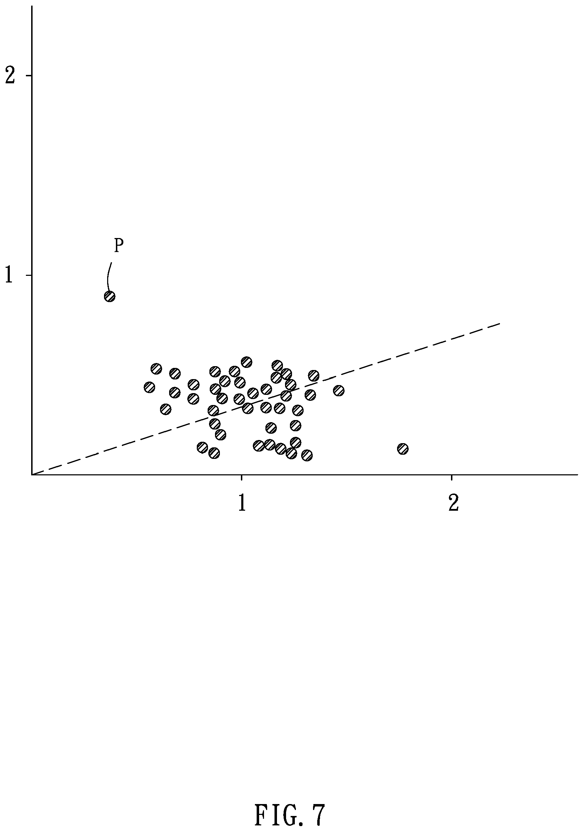

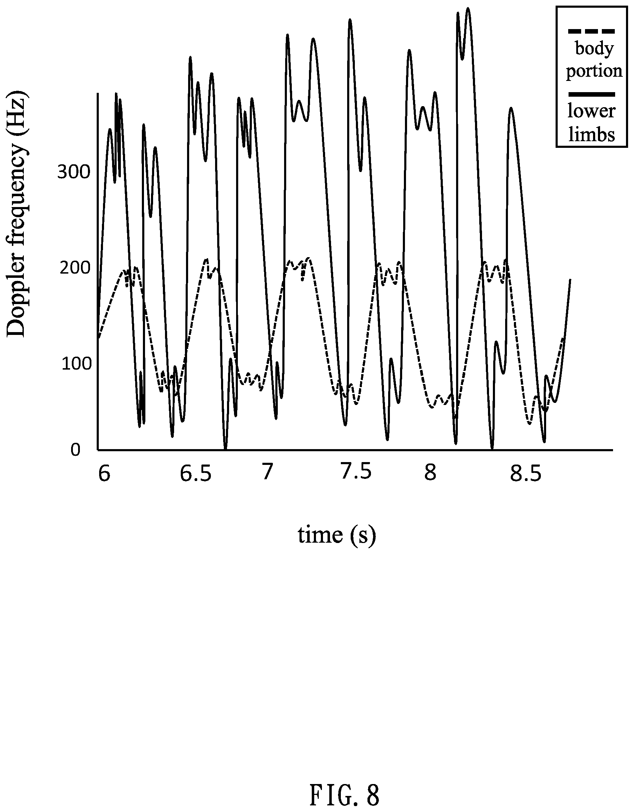

In another embodiment in which the radar module **50** detects the target object which is a dog, the image analysis unit **10** receives and processes the signal **S1A** to produces the image signal **S2,** wherein the multiple sample points **P** of the image signal **S2** are illustrated in **Fig. 7****,** which comprises an obviously lower transverse body portion and lower limbs-alike sample points **P** on the bottom of the transverse body portion. According to the dynamic change of the sample points **P,** the lower limbs portion presents an alternate movement of four legs. Also, the frequency spectrum analysis unit **20** receives and process the signal **S1B** to produce the frequency spectrum signal **S3,** which is shown as the waveform diagram in **Fig. 8****.** The waveform representing the transverse portion and the waveform representing the lower limbs have obvious random waveform at the wave crest and the wave trough. Therefore, the target feature **F1** of the target object acquired by the feature extraction portion **31** from the image signal **S2** and the frequency spectrum signal **S3** is compared with the comparison feature **F2,** so as to determine that the target object having the target feature **F1** is a living body. Furthermore, features of the image signal **S2** and the frequency spectrum signal **S3** can also be applied for determining that the target object is a dog.

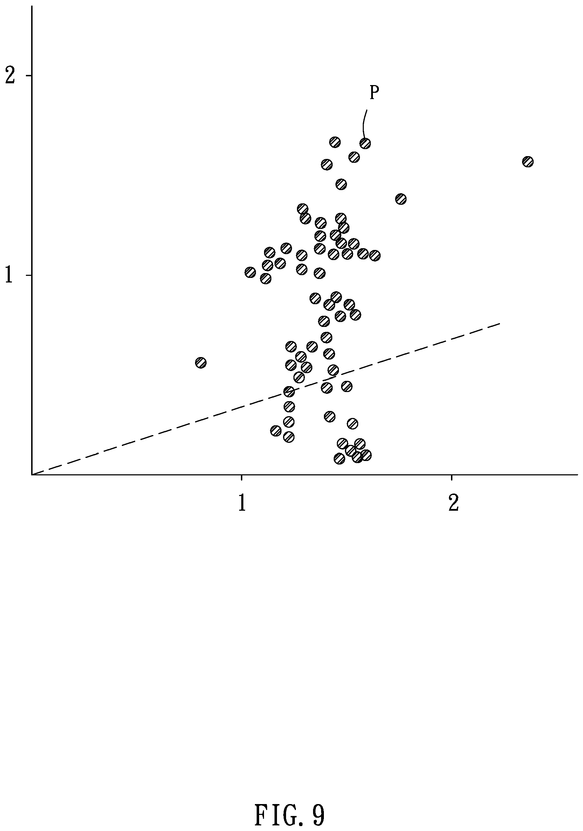

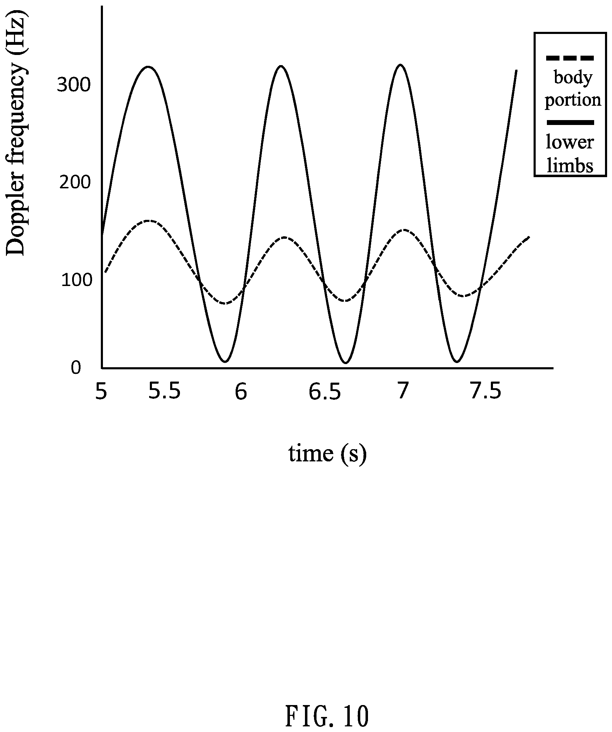

In still another embodiment in which the radar module **50** detects the target object which is a pedestrian, the image analysis unit **10** receives and processes the signal **S1A** to produces the image signal **S2,** wherein the multiple sample points **P** of the image signal **S2** are illustrated in **Fig. 9****,** which comprises a straight body portion and lower limbs and upper limbs-alike sample points **P** on the straight body portion. According to the dynamic change of the sample points **P,** a regular movement of the lower limbs portion is obviously shown. Also, the frequency spectrum analysis unit **20** receives and process the signal **S1B** to produce the frequency spectrum signal **S3,** which is shown as the waveform diagram in **Fig. 10****.** The waveforms representing the straight body portion and the lower limbs are distributed in a regular sinusoidal distribution, respectively. Therefore, the target feature **F1** of the target object acquired by the feature extraction portion **31** from the image signal **S2** and the frequency spectrum signal **S3** is compared with the comparison feature **F2,** so as to determine that the target object having the target feature **F1** is a living body. Furthermore, features of the image signal **S2** and the frequency spectrum signal **S3** can also be applied for determining that the target object is a pedestrian. For further illustration, to further identify if the target object is a pedestrian, in the aforementioned examples in which the target object might be a tree, dog, or pedestrian, features of each target object are obvious for facilitating an accurate identification. More specifically, regardless of the image signal **S2** or the frequency spectrum signal **S3,** the result of feature extraction by the feature extraction unit **31** and subsequent comparison by the match identification portion **32** is able to accurately determine that the target object is a pedestrian or not. However, in certain cases, the image signal **S2** or frequency spectrum signal **S3** may possibly cause a tree or a dog to present a performance which is similar to that of the a pedestrian, thereby leading to a misidentification.

For example, when a tree is blown by wind, its trunk may slightly wave, and its branches may wave in a larger scale. Such performance is similar to the motion of a slowing moving pedestrian, wherein the body slightly waves and the limbs wave in a larger scale. As a result, the frequency spectrum signal **S3** acquired may have a performance difficult to be identified. However, as for the image signal **S2** in this case, the image of the tree has an obvious body portion and scattering sample points distributed on the top of the body portion, and the lower limbs portion is presented with only one continuous point area, which is different from the performance of a person's lower limbs having two obvious leg portions. Therefore, it is able to accurately identify that the target object is not a pedestrian based on the image signal **S2.**

Regarding the identification mechanism for a dog, when a dog slowly move toward or away from a vehicle, the performance of the image signal **S2** is similar to a pedestrian walking with two legs, wherein only two legs are clearly identified, or even only a continuous point area due to the overly closed lower limbs. As a result, it is unable to clearly identify the four legs of a dog. Also, a dog usually has a height similar to a human child, so that it is unable to identify if such target object is a pedestrian through the image signal **S2.** However, through the performance of the frequency spectrum signal **S3,** it is allowed to clearly identify that the time period and shape of the four waving limbs are different from that of a pedestrian. Therefore, the target object can be accurately identified to be a non-pedestrian according to the frequency spectrum signal **S3.** Thus, by applying the calculation unit **30** to receive the image signal **S2** and the frequency spectrum signal **S3,** the feature extraction operation of the feature extraction portion **31,** and the comparing operation of the match identification portion **32,** a supplementary identification result is achieved, thereby greatly reducing the possibility of misidentification.

With the foregoing configuration, functions and effects of the present invention will be illustrated below.

The calculation unit **30** carries out the feature extraction operation on the image signal **S2** and the frequency spectrum signal **S3,** respectively, the target object is efficiently and accurately identified as being a living body or not. Compared with conventional arts for identifying a pedestrian's image, the present invention can confirm the target features without the need of a complicated algorithm. Also, the issue of the camera misidentifying the image due to insufficient light during image capturing process is prevented.

When carrying out a comparison on the target feature, the match identification portion **32** applies the comparison feature **F2** which is categorized as a living body in the feature database **40** as a standard of comparison, so as to accordingly identify if the target object is a living body. Also, the feature database **40** is able to be continuously add the comparison features **F2** of a living body into the living body sub-database **42,** realizing a deep depth learning of artificial intelligence, so that when the match identification portion **32** carries out the comparison on the target feature **F1,** sufficient comparison samples can be taken as references, thereby improving the identification accuracy.

By using the signal **S1** generated by a single continuous wave radar **53,** the image analysis unit **10** and the frequency spectrum analysis unit **20** are able to form the image signal **S2** and the frequency spectrum signal **S3,** respectively, for facilitating the feature extraction operation of the feature extraction portion **31.** Therefore, the volume of components and the cost of radar equipment are reduced.

The invention is not to be limited except as by the appended claims.

## Claims

1. A living body radar system (100), comprising:
an image analysis unit (10) for receiving a signal (S1) detected by a radar and signally processing the signal (S1) to produce a plurality of sample points to form an image signal (S2);
a frequency spectrum analysis unit (20) for receiving the signal (S1) and signally processing the signal (S1) to produce a frequency spectrum signal (S3); and
a calculation unit (30) electrically connected with the image analysis unit (10) and the frequency spectrum analysis unit (20), the calculation unit (30) comprising a feature extraction portion (31) and a match identification portion (32), the feature extraction portion (31) receiving the image signal (S2) and the frequency spectrum signal (S3) and carrying out a feature extraction operation to acquire a target feature (F1) of a target object, the match identification portion (32) carrying out a comparison operation on the target feature (F1),
wherein the match identification portion (32) is electrically connected with a feature database (40); the feature database (40) stores a comparison feature (F2/F3) of a living body; when the match identification portion (32) carries out the comparison operation on the target feature (F1), the match identification (32) accesses the comparison feature (F2/F3) and compares the target feature (F1) with the comparison feature (F2/F3),
wherein the comparison feature (F2/F3) is acquired by the feature extraction operation on an image sample signal (S4) and a frequency spectrum sample signal (S5) that are acquired by the radar detecting a living body,
**characterized in that**
the living body is a human body; when the comparison feature (F2/F3) is compared with the target feature (F1), the image signal (S2) is compared with a lower limbs motion of the human body in the image sample signal (S4), and the frequency spectrum signal (S3) is compared with the lower limbs motion and a body motion of the human body in the frequency spectrum sample signal (S5).

2. The radar system (100) of claim 1, wherein the calculation unit (30) applies an artificial intelligence system based on a long short-term memory (LSTM) algorithm for carrying out the feature extraction and comparison processes.

3. The radar system (100) of claim 1, further comprising a radar module (50) for detecting the target object to produce the signal (S1).

4. The radar system (100) of claim 3, wherein the radar module (50) comprise a point cloud radar (51) and a micro-Doppler radar (52); a signal produced by the point cloud radar (51) is applied for the image analysis unit (10) to form the image signal (S2), and a signal produced by the micro-Doppler radar (52) is applied for the frequency spectrum analysis unit (20) to produce the frequency spectrum signal (S3).

5. The radar system (100) of claim 3, wherein the radar module (50) comprises a continuous wave radar (53), a signal produced by the continuous wave radar (53) is applied for the image analysis unit (10) and the frequency analysis unit (20) to form the image signal (S2) and the frequency spectrum signal (S3), respectively.

6. A living body identification method (200) of a living body radar system (100), comprising:
receiving, by an image analysis unit (10), a signal (S1) detected by a radar and signally processing the signal (S1) to produces a plurality of sample points to form an image signal (S2);
receiving, by a frequency spectrum analysis unit (20), the signal (S1) and signally processing the signal (S1) to produce a frequency spectrum signal (S3);
receiving, by a feature extraction portion (31), the image signal (S2) and the frequency spectrum signal (S3) and carrying out a feature extraction operation to acquire a target feature (F1) of a target object; and
carrying out, by a match identification portion (32), a comparison operation on the target feature (F1) to identify if the target object is a living body,
wherein when the match identification portion (32) carries out the comparison operation on the target feature (F1), the match identification (32) accesses a comparison feature (F2) and compares the target feature (F1) with the comparison feature (F2),
wherein the comparison feature (F2) is acquired by the feature extraction operation on an image sample signal (S4) and a frequency spectrum sample signal (S5) that are acquired by the radar detecting a living body,
**characterized in that** the living body is a human body; when the comparison feature (F2) is compared with the target feature (F1), the image signal (S2) is compared with a lower limbs motion of the human body in the image sample signal (S4), and the frequency spectrum signal (S3) is compared with the lower limbs motion and a body motion of the human body in the frequency spectrum sample signal (S5).

7. The identification method (200) of claim 6, wherein the comparison feature (F2) is established in a feature database (40) and categorized as the comparison feature (F2) of a living body and applied as a standard for the match identification portion (32) to identify the target object as the living body.

8. The identification method (200) of claim 7, wherein the feature database (40) comprises a living body sub-database (41) and a non-living body sub-database (42); the comparison feature (F2) categorized as a living body is stored in the living body sub-database (41); the non-living body sub-database (42) stores a comparison feature (F3) categorized as a non-living body and applied as a standard for the match identification portion (32) exclude the target object from a living body.

## Patentansprüche

1. Ein Radarsystem für lebende Körper (100), umfassend:
eine Bildanalyseeinheit (10) zum Empfangen eines von einem Radar erfassten Signals (S1) und zum signalmäßigen Verarbeiten des Signals (S1), um zur Bildung eines Bildsignals (S2) eine Vielzahl von Abtastpunkten zu erzeugen;
eine Frequenzspektrum-Analyseeinheit (20) zum Empfangen des Signals (S1) und zum signalmäßigen Verarbeiten des Signals (S1), um ein Frequenzspektrumsignal (S3) zu erzeugen; und
eine Berechnungseinheit (30), die elektrisch mit der Bildanalyseeinheit (10) und der Frequenzspektrum-Analyseeinheit (20) verbunden ist, wobei die Berechnungseinheit (30) ein Merkmalsextraktionsteil (31) und ein Übereinstimmungsidentifikationsteil (32) umfasst, das Merkmalsextraktionsteil (31) das Bildsignal (S2) und das Frequenzspektrumsignal (S3) empfängt und einen Merkmalsextraktionsvorgang durchführt, um ein Zielmerkmal (F1) eines Zielobjekts zu erfassen, das Übereinstimmungsidentifikationsteil (32) einen Vergleichsvorgang am Zielmerkmal (F1) durchführt,
wobei das Übereinstimmungsidentifikationsteil (32) elektrisch mit einer Merkmalsdatenbank (40) verbunden ist; die Merkmalsdatenbank (40) ein Vergleichsmerkmal (F2/F3) eines lebenden Körpers speichert; wenn das Übereinstimmungsidentifikationsteil (32) den Vergleichsvorgang am Zielmerkmal (F1) durchführt, das Übereinstimmungsidentifikationsteil (32) auf das Vergleichsmerkmal (F2/F3) zugreift und das Zielmerkmal (F1) mit dem Vergleichsmerkmal (F2/F3) vergleicht,
wobei das Vergleichsmerkmal (F2/F3) durch den Merkmalsextraktionsvorgang an einem Bildabtastsignal (S4) und einem Frequenzspektrum-Abtastsignal (S5) erfasst wird, die durch das einen lebenden Körper erfassende Radar erfasst werden,
**dadurch gekennzeichnet,**
**dass** der lebende Körper ein menschlicher Körper ist; Wenn das Vergleichsmerkmal (F2/F3) mit dem Zielmerkmal (F1) verglichen wird, wird das Bildsignal (S2) mit einer Bewegung der unteren Gliedmaßen des menschlichen Körpers im Bildabtastsignal (S4) verglichen, und wird das Frequenzspektrumsignal (S3) mit der Bewegung der unteren Gliedmaßen und einer Körperbewegung des menschlichen Körpers im Frequenzspektrum-Abtastsignal (S5) verglichen.

2. Radarsystem (100) nach Anspruch 1, wobei die Berechnungseinheit (30) ein künstliches Intelligenzsystem basierend auf einem Long short-termmemory- (LSTM) Algorithmus zum Durchführen der Merkmalsextraktions- und Vergleichsprozesse einsetzt.

3. Radarsystem (100) nach Anspruch 1, ferner umfassend ein Radarmodul (50) zum Erkennen des Zielobjekts, um das Signal (S1) zu erzeugen.

4. Radarsystem (100) nach Anspruch 3, wobei das Radarmodul (50) ein Point-Cloud-Radar (51) und ein Mikro-Doppler-Radar (52) umfasst; ein vom Point-Cloud-Radar (51) erzeugtes Signal für die Bildanalyseeinheit (10) zur Bildung des Bildsignals (S2) verwendet wird und ein vom Mikro-Doppler-Radar (52) erzeugtes Signal für die Frequenzspektrum-Analyseeinheit (20) verwendet wird, um das Frequenzspektrumsignal (S3) zu erzeugen.

5. Radarsystem (100) nach Anspruch 3, wobei das Radarmodul (50) ein Dauerstrichradar (53) umfasst, ein vom Dauerstrichradar (53) erzeugtes Signal für die Bildanalyseeinheit (10) und die Frequenzspektrum-Analyseeinheit (20) verwendet wird, um jeweils das Bildsignal (S2) und das Frequenzspektrumsignal (S3) zu bilden.

6. Ein Verfahren zur Identifizierung lebender Körper (200) eines Radarsystems für lebende Körper (100), umfassend:
Empfangen eines von einem Radar erfassten Signals (S1) durch eine Bildanalyseeinheit (10) und signalmäßiges Verarbeiten des Signals (S1), um zur Bildung eines Bildsignals (S2) eine Vielzahl von Abtastpunkten zu erzeugen; Empfangen des Signals (S1) durch eine Frequenzspektrum-Analyseeinheit (20) und signalmäßiges Verarbeiten des Signals (S1), um ein Frequenzspektrumsignal (S3) zu erzeugen;
Empfangen des Bildsignals (S2) und des Frequenzspektrumsignals (S3) durch ein Merkmalsextraktionsteil (31) und Durchführen eines Merkmalsextraktionsvorgangs, um ein Zielmerkmal (F1) eines Zielobjekts zu erfassen; und
Durchführen eines Vergleichsvorgangs am Zielmerkmal (F1) durch ein Übereinstimmungsidentifikationsteil (32), um zu identifizieren, ob das Zielobjekt ein lebender Körper ist,
wobei, wenn das Übereinstimmungsidentifikationsteil (32) den Vergleichsvorgang am Zielmerkmal (F1) durchführt, das Übereinstimmungsidentifikationsteil (32) auf ein Vergleichsmerkmal (F2) zugreift und das Zielmerkmal (F1) mit dem Vergleichsmerkmal (F2) vergleicht,
wobei das Vergleichsmerkmal (F2) durch den Merkmalsextraktionsvorgang an einem Bildabtastsignal (S4) und einem Frequenzspektrum-Abtastsignal (S5) erfasst wird, die durch das einen lebenden Körper erfassende Radar erfasst werden,
**dadurch gekennzeichnet,**
**dass** der lebende Körper ein menschlicher Körper ist; Wenn das Vergleichsmerkmal (F2) mit dem Zielmerkmal (F1) verglichen wird, wird das Bildsignal (S2) mit einer Bewegung der unteren Gliedmaßen des menschlichen Körpers im Bildabtastsignal (S4) verglichen, und wird das Frequenzspektrumsignal (S3) mit der Bewegung der unteren Gliedmaßen und einer Körperbewegung des menschlichen Körpers im Frequenzspektrum-Abtastsignal (S5) verglichen.

7. Identifizierungsverfahren (200) nach Anspruch 6, wobei das Vergleichsmerkmal (F2) in einer Merkmalsdatenbank (40) erstellt und als Vergleichsmerkmal (F2) eines lebenden Körpers kategorisiert und als Standard für das Übereinstimmungsidentifikationsteil (32) verwendet wird, um das Zielobjekt als lebenden Körper zu identifizieren.

8. Identifizierungsverfahren (200) nach Anspruch 7, wobei die Merkmalsdatenbank (40) eine Unterdatenbank für lebende Körper (41) und eine Unterdatenbank für nicht-lebende Körper (42) umfasst; das als lebender Körper kategorisierte Vergleichsmerkmal (F2) in der Unterdatenbank für lebende Körper (41) gespeichert wird; die Unterdatenbank für nicht-lebende Körper (42) ein Vergleichsmerkmal (F3) speichert, das als nicht-lebender Körper kategorisiert und als Standard für das Übereinstimmungsidentifikationsteil (32) verwendet wird, um das Zielobjekt von einem lebenden Körper auszuschließen.

## Revendications

1. Système de radar de corps vivant (100), comprenant :
une unité d'analyse d'image (10) pour recevoir un signal (S1) détecté par un radar et effectuer un traitement de signal sur le signal (S1) pour produire une pluralité de points d'échantillonnage afin de former un signal d'image (S2) ;
une unité d'analyse de spectre de fréquences (20) pour recevoir le signal (S1) et effectuer un traitement de signal sur le signal (S1) pour produire un signal de spectre de fréquences (S3) ; et
une unité de calcul (30) connectée électriquement à l'unité d'analyse d'image (10) et à l'unité d'analyse de spectre de fréquences (20), l'unité de calcul (30) comprenant une partie d'extraction de caractéristiques (31) et une partie d'identification de correspondance (32), la partie d'extraction de caractéristiques (31) recevant le signal d'image (S2) et le signal de spectre de fréquences (S3) et effectuant une opération d'extraction de caractéristiques pour acquérir une caractéristique cible (F1) d'un objet cible, la partie d'identification de correspondance (32) effectuant une opération de comparaison sur la caractéristique cible (F1),
dans lequel la partie d'identification de correspondance (32) est connectée électriquement à une base de données de caractéristiques (40) ; la base de données de caractéristiques (40) stocke une caractéristique de comparaison (F2/F3) d'un corps vivant ; lorsque la partie d'identification de correspondance (32) effectue l'opération de comparaison sur la caractéristique cible (F1), la partie d'identification de correspondance (32) accède à la caractéristique de comparaison (F2/F3) et compare la caractéristique cible (F1) à la caractéristique de comparaison (F2/F3),
dans lequel la caractéristique de comparaison (F2/F3) est acquise par l'opération d'extraction de caractéristiques sur un signal d'échantillon d'image (S4) et un signal d'échantillon de spectre de fréquences (S5) qui sont acquis par le radar détectant un corps vivant,
**caractérisé par le fait que**
le corps vivant est un corps humain ; lorsque la caractéristique de comparaison (F2/F3) est comparée à la caractéristique cible (F1), le signal d'image (S2) est comparé à un mouvement de membres inférieurs du corps humain dans le signal d'échantillon d'image (S4), et le signal de spectre de fréquences (S3) est comparé au mouvement de membres inférieurs et à un mouvement corporel du corps humain dans le signal d'échantillon de spectre de fréquences (S5).

2. Système de radar (100) selon la revendication 1, dans lequel l'unité de calcul (30) applique un système d'intelligence artificielle basé sur un algorithme de mémoire longue à court terme (LSTM) pour effectuer les processus d'extraction de caractéristiques et de comparaison.

3. Système de radar (100) selon la revendication 1, comprenant en outre un module radar (50) pour détecter l'objet cible afin de produire le signal (S1).

4. Système de radar (100) selon la revendication 3, dans lequel le module radar (50) comprend un radar à nuage de points (51) et un radar micro-Doppler (52) ; un signal produit par le radar à nuage de points (51) est appliqué à l'unité d'analyse d'image (10) pour former le signal d'image (S2), et un signal produit par le radar micro-Doppler (52) est appliqué à l'unité d'analyse de spectre de fréquences (20) pour produire le signal de spectre de fréquences (S3).

5. Système de radar (100) selon la revendication 3, dans lequel le module radar (50) comprend un radar à ondes entretenues (53), un signal produit par le radar à ondes entretenues (53) est appliqué à l'unité d'analyse d'image (10) et à l'unité d'analyse de spectre de fréquences (20) pour former respectivement le signal d'image (S2) et le signal de spectre de fréquences (S3).

6. Procédé d'identification de corps vivant (200) d'un système de radar de corps vivant (100), comprenant :
recevoir, par une unité d'analyse d'image (10), un signal (S1) détecté par un radar et effectuer un traitement de signal sur le signal (S1) pour produire une pluralité de points d'échantillonnage afin de former un signal d'image (S2) ; recevoir, par une unité d'analyse de spectre de fréquences (20), le signal (S1) et effectuer un traitement de signal sur le signal (S1) pour produire un signal de spectre de fréquences (S3) ;
recevoir, par une partie d'extraction de caractéristiques (31), le signal d'image (S2) et le signal de spectre de fréquences (S3) et effectuer une opération d'extraction de caractéristiques pour acquérir une caractéristique cible (F1) d'un objet cible ; et
effectuer, par une partie d'identification de correspondance (32), une opération de comparaison sur la caractéristique cible (F1) pour identifier si l'objet cible est un corps vivant,
dans lequel, lorsque la partie d'identification de correspondance (32) effectue l'opération de comparaison sur la caractéristique cible (F1), la partie d'identification de correspondance (32) accède à une caractéristique de comparaison (F2) et compare la caractéristique cible (F1) à la caractéristique de comparaison (F2),
dans lequel la caractéristique de comparaison (F2) est acquise par l'opération d'extraction de caractéristiques sur un signal d'échantillon d'image (S4) et un signal d'échantillon de spectre de fréquences (S5) qui sont acquis par le radar détectant un corps vivant,
**caractérisé par le fait que**
le corps vivant est un corps humain ; lorsque la caractéristique de comparaison (F2) est comparée à la caractéristique cible (F1), le signal d'image (S2) est comparé à un mouvement de membres inférieurs du corps humain dans le signal d'échantillon d'image (S4), et le signal de spectre de fréquences (S3) est comparé au mouvement de membres inférieurs et à un mouvement corporel du corps humain dans le signal d'échantillon de spectre de fréquences (S5).

7. Procédé d'identification (200) selon la revendication 6, dans lequel la caractéristique de comparaison (F2) est établie dans une base de données de caractéristiques (40) et classée comme la caractéristique de comparaison (F2) d'un corps vivant et appliquée comme standard pour la partie d'identification de correspondance (32) pour identifier l'objet cible comme étant le corps vivant.

8. Procédé d'identification (200) selon la revendication 7, dans lequel la base de données de caractéristiques (40) comprend une sous-base de données de corps vivants (41) et une sous-base de données de corps non vivants (42) ; la caractéristique de comparaison (F2) classée comme un corps vivant est stockée dans la sous-base de données de corps vivants (41) ; la sous-base de données de corps non vivants (42) stocke une caractéristique de comparaison (F3) classée comme un corps non vivant et appliquée comme standard pour la partie d'identification de correspondance (32) pour exclure l'objet cible d'un corps vivant.
